**Europäisches Patentamt**

**European Patent Office**

**Office européen des brevets**

(19)

(11) Veröffentlichungsnummer : **0 345 578 B1**

(12) # EUROPÄISCHE PATENTSCHRIFT

(45) Veröffentlichungstag der Patentschrift :
04.12.91 Patentblatt 91/49

(51) Int. Cl.⁵ : **C09C 1/22**, // **C08K3/22, C04B33/14, C03C1/00, C09D5/00, C04B41/00**

(21) Anmeldenummer : 89109608.3

(22) Anmeldetag : 27.05.89

(54) **Thermostabile Zinkferrit-Farbpigmente, Verfahren zu ihrer Herstellung sowie deren Verwendung.**

(30) Priorität : 09.06.88 DE 3819626

(43) Veröffentlichungstag der Anmeldung :
13.12.89 Patentblatt 89/50

(45) Bekanntmachung des Hinweises auf die
Patenterteilung :
04.12.91 Patentblatt 91/49

(84) Benannte Vertragsstaaten :
DE FR GB IT

(56) Entgegenhaltungen :
EP-A- 0 074 563

(73) Patentinhaber : BAYER AG
W-5090 Leverkusen 1 Bayerwerk (DE)

(72) Erfinder : Rademachers, Jakob, Dr.
Hoeninghausstr. 34
W-4150 Krefeld 12 (DE)
Erfinder : Wilhelm, Volker, Dr.
Fichtenweg 1
W-5060 Bergisch-Gladbach 2 (DE)
Erfinder : Keifer, Siegfried, Dr.
Buschstr. 151
W-4150 Krefeld 1 (DE)
Erfinder : Burow, Wilfried, Dr.
Glindholzstr. 100
W-4150 Krefeld 1 (DE)

# Beschreibung

Die vorliegende Erfindung betrifft Zinkferrit-Farbpigmente, einem Verfahren zu ihrer Herstellung sowie deren Verwendung. Sie betrifft insbesondere Zinkferrit-Farbpigmente mit verbesserter Thermostabilität.

Zinkferrit kristallisiert im Spinellgitter und wird je nach stöchiometrischer Zusammensetzung, Zusatzstoffen, Teilchengrößen, Kristallform und Oberflächeneigenschaften als Ausgangsmaterial für Weichmagnete, als Korrosionsschutz- oder als Farbpigment eingesetzt.

Nicht ferrimagnetische Farbpigmente sind im angelsächsischen Sprachraum als "Tan"-Pigmente bekannt geworden.

Die Herstellung der Zinkferrit-Pigmente ist in der US-A 3832455 beschrieben. Hierbei wird Eisenoxidhydroxid aus EisenII-sulfatlösung auf Zinkoxid oder Zinkcarbonat bei pH-Werten von 5 bis 6 und Temperaturen von 49 bis 52°C gefällt, die erhaltene Suspension filtriert, die Feststoffe gewaschen, getrocknet und geglüht.

Nach dem Verfahren der US-A 2 904 395 werden die Zinkferritpigmente sowohl durch gemeinsame Fällung aus den entsprechenden Eisen- und Zink-haltigen Lösungen mit anschließendem Filtrieren, Waschen, Trocknen und Glühen als auch durch Glühen einer in wäßriger Suspension gewonnenen innigen Mischung aus fertigem Eisenoxidhydroxid und Zinkoxid hergestellt. Das Kalzinieren erfolgt bei Temperaturen bis zu 1000°C unter Zusatz von Katalysatoren, beispielsweise Salzsäure oder Zinkchlorid.

Aus der US-A 4222790 ist bekannt geworden, daß der Glühprozeß zur Herstellung von Zink- oder Magnesiumferrit verbessert werden kann, wenn der Mischung Alkalimetallsilikat zugesetzt wird. Zur besseren Filtration wird Aluminiumsulfat als Flockungsmittel zugegeben.

In der DE-A 3 136 279 wird die Zugabe von $Al_2O_3$ und $P_2O_5$ bildende Verbindungen bei der Kalzinierung von chloridfreien farbreinen Zinkferritpigmenten beschrieben.

Nach der EP-B 154919 werden farbreine Zinkferritpigmente ohne Zusatzstoffe dadurch erhalten, daß nadelförmiges $\alpha$-FeOOH bestimmter Teilchengröße und Oberfläche und Zinkoxid bestimmter Oberfläche eingesetzt werden.

Zur Verbesserung des Abkühlverhaltens nach dem Glühen wird Borsäure oder Borphosphat zugesetzt.

Schließlich wird in der JP-B 57011829 zur Herstellung hitzebeständiger gelber Zinkferrit-Farbpigmente Titandioxid zugesetzt.

Die erhaltenen anisometrischen Zinkferrite sind in ihren Eigenschaften näher in : T.C. Patton, Pigment Handbook, Vol. 1, Properties and Economics, S. 347 und 348, John Wiley & Sons, New York 1973 beschrieben.

Sie zeichnen sich im allgemeinen durch hervorragende Licht- und Wetterbeständigkeit sowie hohe Thermostabilität aus. Deshalb werden sie auch anstelle von weniger thermostabilen Mischungen aus Eisenoxidgelb und Eisenoxidrot eingesetzt.

Insbesondere haben sie ihre Anwendung zur Einfärbung von Sandgranulaten, Kalksandsteinen, Emails, Keramikglasuren, Einbrennlacken und Kunststoffen gefunden.

Obschon die Zinkferritpigmente bei hohen Temperaturen über 700°C hergestellt werden, unterliegen sie in verschiedenen Systemen, insbesondere bei der Einfärbung in organischen Materialien, unterschiedlich starken Farbveränderungen, so daß sie in diesen Systemen häufig nicht mehr als thermostabil angesehen werden können. So zeigt sich bereits bei der Einfärbung von Kunststoffen, daß die Farbtonverschiebung zu dunkleren, schmutzigen Tönen bereits ab etwa 250°C so deutlich wird, daß eine Einfärbung mit Zinkferritpigmenten nicht mehr sinnvoll ist. Dieses ist speziell bei der Einfärbung von Kunststoffen der Fall, die höhere Verarbeitungstemperaturen erfordern wie z.B. Polyamid oder ABS-Kunststoffen.

Die Aufgabe der vorliegenden Erfindung besteht darin, Zinkferrit-Farbpigmente zur Verfügung zu stellen, die die beschriebenen Nachteile des Standes der Technik nicht aufweisen.

Es wurde nun gefunden, daß diese Anforderung erfüllt wird durch Zinkferrit-Farbpigmente mit einem Lithiumgehalt von 0,01 bis 0,5 Gew.-%, bevorzugt von 0,05 bis 0,2 Gew.-%. Diese Zinkferrit-Pigmente sind Gegenstand dieser Erfindung.

Die überraschend kleinen Zusatzmengen von 0,05 bis 0,2 Gew.-% Lithium genügen bereits für eine ausreichend thermische Stabilität bei der Einfärbung von Kunststoffen bis zu 300°C und höher, so daß auch die Einarbeitung in Polyamid oder ABS-Kunststoffen möglich ist. Bei größeren Lithium-Gehalten im Zinkferrit tritt eine deutliche Verschiebung des Pigment-Farbtons nach dunkleren Brauntönen ein.

Gegenstand der Erfindung ist auch ein Verfahren zur Herstellung der erfindungsgemäßen Zinkferrit-Farbpigmente.

Dieses Verfahren ist dadurch gekennzeichnet, daß einer der Zusammensetzung der Zinkferrit-Farbpigmente entsprechenden Ausgangsmischung von Zinkoxid und Eisenoxid enthaltenden oder ergebenden Rohstoffmischung oder Lösung vor oder während der Kalzinierung eine oder mehrere Lithiumverbindungen in solchen Mengen zugegeben werden, daß nach der Kalzinierung 0,01 bis 0,5 Gew.-% Lithium, bevorzugt 0,05 bis 0,2 Gew.-% Lithium, im Zinkferrit-Farbpigment enthalten sind.

Als Lithiumverbindungen im Rahmen der Herstellung der erfindungsgemäßen thermostabilen Zinkferrit-Farbpigmente können folgende Substanzen z.B. eingesetzt werden :

Lithiumcarbonat, Lithiumfluorid, Lithiumchlorid, Lithiumoxid, Lithiumhydroxid, Lithiumsulfat, Lithiumnitrat, Lithiumphosphat, Lithiumsilikat, Lithiumtitanat, Lithiumzirkonat, Lithiumferrit, Lithiumzinkat, Lithiumborat, Lithiumaluminat, Lithiumstannat, Lithiumaluminiumsilikat.

Aus praktischen Gründen werden bei trockenen Mischungen Lithiumcarbonat, bei noch zu filtrierenden Suspensionen schwerlösliche Verbindung wie Lithiumtitanat, Lithiumborat, Lithiumphosphat oder Lithiumaluminiumsilikat eingesetzt. Bei Verwendung von Lithiumtitanat wird zudem eine oft gewünschte Erhöhung des Helligkeitswertes erzielt. Auch lassen sich natürliche lithiumhaltige Mineralien wie Spodumen, Lepidolith oder Triphyllin einsetzen. Ebenso ist der Zusatz Lithium-organischer Verbindungen wie Lithiumstearat, Lithiumcitrat oder Lithiumbenzoat möglich.

Die Prüfung auf Thermostabilität erfolgt nach DIN 53772 vom August 1982 durch 1 %ige Pigmentierung in thermoplastischen Kunststoffen, wobei die Farbabweichung der Probekörper bei Erhöhung der Einarbeitungstemperatur im Vergleich zur tiefstmöglichen Prüftemperatur bestimmt wird. In Abweichung der DIN-Vorschrift wurde noch ein Farbabstand von 5 anstelle 3 $\Delta E^*$-Einheiten toleriert, weil sich vorwiegend der Buntheitsbeitrag $\Delta C^*$ ändert.

Der Vorteil des erfindungsgemäßen Verfahrens ist auch darin sehen, daß durch den geringen Zusatz an Lithiumverbindungen die Glühtemperatur um 50-100°C erniedrigt werden kann.

Gegenstand der vorliegenden Erfindung ist auch die Verwendung des erfindungsgemäßen Zinkferrit-Farbpigmentes zur Einfärbung von Einbrenn- oder Coil-Coat-Lacken, von Kunststoffen, Sandgranulaten, Kalksandsteinen, Emails und Keramikglasuren.

Anhand der nachfolgenden Beispiele wird die Erfindung näher erläutert, ohne daß dadurch eine Einschränkung der Erfindung bewirkt werden soll.

Beispiel 1

671,5 kg einer homogenisierten wäßrigen Suspension, enthaltend 50 kg Goethit (entspr. 44 kg $Fe_2O_3$) und 21,5 kg Zinkoxid (mit 99,6 Gew.-% ZnO) werden filtriert, der Filterkuchen, enthaltend ca. 32 Gew.-% trockener Feststoff, mit 176 g Lithiumcarbonat versetzt, in einem Schneckenmischer innig vermischt und bei 850°C ca. 30 Minuten geglüht. Nach dem Abkühlen wird der 0,05 Gew.-% Lithium enthaltende Klinker gemahlen. Man erhält ein helles, leuchtendes gelbbraunes Pigment, das im Farbton ähnlich einem Zinkferritpigment entspricht, das ohne Lithiumzusatz bei 900°C geglüht wurde.

Bei der Prüfung des erhaltenen Pigmentes auf Hitzebeständigkeit in PE-HD nach DIN 53772 ergaben sich bei einer Pigmentierung von 1 Gew.-% nach Verarbeitung in einem Doppelwellenextruder und in der "Arburg"-Spritzgießmaschine Farbabstände nach DIN 6174 von 2,8 $\Delta E^*$-Einheiten der Proben, die bei 260°C und bei der tiefstmöglichen Prüftemperatur (= 200°C) als Bezug hergestellt wurden. Bei Verarbeitungstemperaturen von 300°C ergaben sich 5,0 $\Delta E^*$-Einheiten.

Ohne Lithiumzusatz wurden $\Delta E^*$-Einheiten von 6,8 bei 260°C und 9,4 bei 300°C Einarbeitungstemperatur gefunden.

Beispiel 2

Bei der Zugabe von 352 g Lithiumcarbonat und sonst gleicher Arbeitsweise wie in Beispiel 1 wird ein gelbbraunes Zinkferrit-Farbpigment mit einem Lithiumgehalt von 0,1 Gew.-% Li erhalten. Die gefundenen Farbabstände ergaben in PE-HD bei 260°C 1,7 $\Delta E^*$-Einheiten und bei 300°C C 3,8 $\Delta E^*$-Einheiten, bezogen auf die bei 200°C gespritzten Plättchen.

Bei der Einfärbung von ABS-Kunststoff wurde die bei 280°C hergestellte Spritzgußprobe koloristisch mit dem bei 220°C hergestellten Bezugskörper verglichen. Dabei wurde ein Farbabstand $\Delta E^*$ von nur 1,1 Einheiten gemessen.

Beispiel 3

Zu der Goethit und Zinkoxid enthaltenden Suspension aus Beispiel 1 wird 330 g Lithiumtitanat gegeben und innig verrührt. Nach dem Filtrieren, Glühen und Mahlen erhält man ein helles Zinkferrit-Farbpigment mit 0,06 Gew.-% Li, das in der Thermostabilitätsprüfung in PE-HD einen Farbabstand bei 260°C von 2,1 $\Delta E^*$-Einheiten und bei 300°C von 3,9 $\Delta E^*$-Einheiten, verglichen mit dem bei 200°C hergestellten Bezugskörper, aufwies.

Beispiel 4

Es wurde wie in Beispiel 3 gearbeitet mit der Variante, daß anstelle von Lithiumtitanat 365 g Lithiumphosphat (entspr. 0,1 Gew.-% Li) zugegeben wurde. Die Farbabstände betrugen bei 260°C 2,0 und bei 300°C 4,1 $\Delta E^*$-Einheiten.

Beispiel 5

In diesem Beispiel werden der Suspension 600 g Lithiumborat zugesetzt (entspr. 0,1 Gew.-% Li). Das erhaltene Farbpigment zeigte in der Thermostabilitätsprüfung bei der 1 %igen Einarbeitung in PE-HD bei 260°C ein $\Delta E^*$ von 2,1 und bei 300°C von 4,4 Einheiten.

**Patentansprüche**

1. Zinkferrit-Farbpigmente mit einem Gehalt an Lithium von 0,01 bis 0,5 Gew.-%.

2. Zinkferrit-Farbpigmente gemäß Anspruch 1, dadurch gekennzeichnet, daß der Gehalt an Lithium 0,05 bis 0,2 Gew.-% beträgt.

3. Verfahren zur Herstellung von Zinkferrit-Farbpigmenten gemäß einem der Ansprüche 1 oder 2, dadurch gekennzeichnet, daß einer der Zusammensetzung der Zinkferrit-Farbpigmente entsprechenden Ausgangsmischung von Zinkoxid und Eisenoxid enthaltenden oder ergebenen Rohstoffmischung oder Lösung vor oder während der Kalzinierung eine oder mehrere Lithiumverbindungen in solchen Mengen zugegeben werden, daß nach der Kalzinierung 0,01 bis 0,5 Gew.-% Lithium, bevorzugt 0,05 bis 0,2 Gew.-% Lithium, im Zinkferrit-Farbpigment enthalten sind.

4. Verwendung des Zinkferrit-Farbpigmentes gemäß einem oder mehrerer der Ansprüche 1 bis 3 zur Einfärbung in Einbrenn- oder Coil-Coat-Lacken, in Kunststoffen, Sandgranulaten, Kalksandsteinen, Emails und Keramikglasuren.

## Claims

1. Coloured zinc ferrite pigments having a lithium content of 0.01 to 0.5% by weight.

2. Coloured zinc ferrite pigments as claimed in claim 1, characterized in that the lithium content is 0.05 to 0.2% by weight.

3. A process for the production of the coloured zinc ferrite pigments claimed in claim 1 or 2, characterized in that one or more lithium compounds is/are added before or during or calcination to a starting mixture — corresponding to the composition of the coloured zinc ferrite pigments — of a mixture or solution of raw materials containing or yielding zinc oxide and iron oxide in such quantities that, after calcination, the coloured zinc ferrite pigment contains 0.01 to 0.5% by weight lithium and preferably 0.05 to 0.2% by weight lithium.

4. The use of the coloured zinc ferrite pigment claimed in one or more of claims 1 to 3 for pigmenting stoving or coil-coat lacquers, plastics, sand granules, lime sand-stones, enamels and ceramic glazes.

## Revendications

1. Pigments colorants de ferrite de zinc ayant une teneur en lithium comprise entre 0,01 et 0,5% en poids.

2. Pigments colorants de ferrite de zinc selon la revendication 1, caractérisés en ce que la teneur en lithium est comprise entre 0,05 et 0,2% en poids.

3. Procédé de fabrication de pigments colorants de ferrite de zinc selon une des revendications 1 ou 2, caractérisé en ce qu'on ajoute à un mélange ou solution de matières premières contenant ou donnant le mélange de base d'oxyde de zinc et d'oxyde de fer correspondant à la composition des pigments colorants de ferrite de zinc, avant ou pendant la calcination, un ou plusieurs composés de lithium en des quantités telles que le pigment colorant de ferrite de zinc contient après la calcination 0,01 à 0,5% en poids de lithium, de préférence 0,05 à 0,2% en poids de lithium.

4. Emploi du pigment colorant de ferrite de zinc selon une ou plusieurs des revendications 1 à 3 pour la coloration de vernis thermodurcissables ou de laques pour couchage sur bande, de matières plastiques, de granulats de sable, de briques silico-calcaires, d'émaux et de glaçages pour céramiques.